# EUROPÄISCHE PATENTSCHRIFT

(11) **EP 1 891 269 B1**
(45) Veröffentlichungstag und Bekanntmachung des Hinweises auf die Patenterteilung: **05.07.2017**
(21) Anmeldenummer: 06763252.1
(22) Anmeldetag: 24.05.2006
(51) Int. Cl.: C09C 1/02, D21H 17/67, D21H 17/69

(54) **POLYMER-PIGMENT-HYBRIDE FÜR DIE PAPIERHERSTELLUNG**
POLYMER-PIGMENT HYBRIDS FOR USE IN PAPERMAKING
HYBRIDES POLYMERE/PIGMENT DESTINES A LA FABRICATION DE PAPIER

(30) Priorität: 31.05.2005 DE 102005025374
(43) Veröffentlichungstag der Anmeldung: 27.02.2008
(73) Patentinhaber: Omya International AG, 4665 Oftringen (CH)
(72) Erfinder: MAHR, Norbert, 67117 Limburgerhof (DE); MECK, Dieter, 67251 Freinsheim (DE); BLUM, Rainer, 68307 Mannheim (DE); HEMEL, Ralf, 67056 Ludwigshafen (DE); GISPERT, Norbert, 67551 Worms-horchheim (DE); SCHMIDT-THÜMMES, Jürgen, 67141 Neuhofen (DE); HAMERS, Christoph, 67071 Ludwigshafen (DE)
(74) Vertreter: Maiwald Patentanwalts GmbH
(86) Internationale Anmeldenummer: PCT/EP2006/062560
(87) Internationale Veröffentlichungsnummer: WO 2006/128814

(56) Entgegenhaltungen:
- WO-A-92/14881
- WO-A-2006/050871
- WO-A-2006/050873
- WO-A-2006/066769
- DE-A1- 2 516 097
- DE-A1- 10 209 448
- DE-A1- 10 315 363
- FR-A- 2 873 127

## Beschreibung

Die Erfindung betrifft ein Verfahren zur Herstellung von füllstoffhaltigen Papieren und füllstoffhaltigen Papierprodukten durch Zusatz einer wässrigen Anschlämmung mindestens eines feinteiligen Füllstoffs, der mit mindestens einem Bindemittel behandelt ist, zu einem Papierstoff und Entwässerns des Papierstoffs unter Blattbildung.

Aus der DE-A 25 16 097 ist bekannt, dass man wässrige Suspensionen von anorganischen Teilchen, die ein positives Zetapotential aufweisen, mit einem anionischen Latex eines Harzes mischt, wobei das Gleichgewicht der negativen und positiven Ladungen der Teilchen des anorganischen Stoffes in der Suspension und des Harzes in dem Latex beim Vermischen so eingestellt wird, dass im Wesentlichen alle Harzteilchen an die Oberfläche der Teilchen des anorganischen Stoffes gebunden werden und die so erhaltenen beschichteten Teilchen ein Zetapotential von im wesentlichen von 0 aufweisen. Die Behandlung der anorganischen Teilchen in einem Latex setzt jedoch voraus, dass die anorganischen Teilchen mit einem kationischen Mittel, wie kationischer Stärke, vorbehandelt werden, damit sie ein positives Zetapotential haben. Die wässrigen Suspensionen werden bei der Herstellung von füllstoffhaltigem Papier dem Papierstoff zugesetzt.

Aus der WO 92/14881 ist ein Verfahren zur Herstellung von wässrigen Aufschlämmungen von feinteiligen Füllstoffen, die zumindest teilweise mit Polymerisaten überzogen sind, für die Herstellung füllstoffhaltiger Papiere bekannt. Bei diesem Verfahren gibt man zunächst zu einer wässrigen Aufschlämmung von Füllstoffen einen kationischen Verfestiger für Papier und danach einen nicht-ionischen und/oder anionischen Verfestiger für Papier oder auch ein nichtionisches oder anionisches Leimungsmittel für Papier. Die kationischen Einsatzstoffe werden jedoch immer in einer solchen Menge eingesetzt, dass die feinteiligen Füllstoffe eine kationische Ladung tragen.

Aus der DE-A 102 09 448 sind wässrige Anschlämmungen von feinteiligen Füllstoffen bekannt, die zumindest teilweise mit Polymerisaten überzogen sind. Man erhält diese Produkte, indem man wässrige Suspensionen von anorganischen Teilchen mit mindestens einem Bindemittel für Papierstreichfarben behandelt, beispielweise mischt man die Komponenten durch Rühren oder unterwirft sie in einem Ultraturrax-Gerät der Einwirkung von Scherkräften. Die so erhältlichen Polymer-Pigment Anschlämmungen werden zur Herstellung von füllstoffhaltigen Papieren eingesetzt.

Weitere wässrige Anschlämmungen von feinteiligen Füllstoffen, die zumindest teilweise mit Polymerisaten überzogen sind, werden in der DE-A 103 15 363 beschrieben. Man erhält sie, indem man wässrige Anschlämmungen feinteiliger Füllstoffe mit mindestens einem wasserlöslichen amphoteren Copolymerisat behandelt, das durch (i) Copolymerisieren mindestens eines N-Vinylcarbonsäureamids und mindestens einer monoethylenisch ungesättigten Carbonsäure sowie gegebenenfalls anderen Monomeren und (ii) anschließende teilweise oder vollständige Abspaltung von Carboxyalkylgruppen aus den Vinylcarbonsäureamid-Einheiten der Polymerisate unter Bildung von Aminogruppen erhältlich ist. Die elektrophoretische Mobilität der Füllstoffteilchen wird beispielsweise so eingestellt, dass sie bei pH 7 negativ ist oder maximal null beträgt. Die wässrigen Anschlämmungen der mit diesen Polymeren modifizierten feinteiligen Füllstoffe werden bei der Papierherstellung dem Papierstoff zugesetzt. Man erhält füllstoffhaltige Papierprodukte wie Papier, Pappe und Karton.

Aus der älteren DE-Anmeldung 10 2004 054 913.3 ist eine Papierstreichmasse bekannt, die mindestens ein anorganisches Pigment und, bezogen auf 100 Gew.-Teile der anorganischen Pigmente, weniger als 40 Gew.-Teile mindestens eines organischen Polymers und weniger als 25 Gew.-Teile Wasser oder sonstiger Lösemittel enthält. Die Papierstreichmasse wird durch ein Trockenbeschichtungsverfahren auf Papier oder Karton aufgetragen. Sie enthält als Füllstoff ein Pigment-Polymerhybrid, das beispielsweise durch Trocknen einer Mischung aus Pigment und Binder oder durch Vermahlen eines Pigments in Gegenwart eines Binders erhältlich ist.

Gegenstand der ältern DE-Anmeldung 10 2004 054 912.5 ist eine wässrige Papierstreichmasse, die organische Polymere als Bindemittel und anorganische Pigmente enthält, wobei die Bindemittel zumindest teilweise in Form eines Pigment-Polymerhybrids vorliegen. Das Pigment-Polymerhybrid ist durch Vermahlen des anorganischen Pigments in Gegenwart des Bindemittels erhältlich.

Aus der älteren FR-Anmeldung 04 07 806 ist ein Verfahren zur Herstellung von feinteiligen Polymer-Pigment-Hybriden bekannt, die mindestens ein Pigment und mindestens ein Bindemittel enthalten und als Pulver, in einer Suspension oder in einer wässrigen Dispersion vorliegen. Die Polymer-Pigment-Hybrid-Teilchen sind dadurch erhältlich, dass man in einem Mahlwerk mindestens eine wässrige Suspension mindestens eines anorganischen Pigments und mindestens eine Lösung, Suspension oder wässrige Dispersion mindestens eines Bindemittels gemeinsam vermahlt, und die so erhältliche wässrige Suspension gegebenenfalls trocknet. Die wässrige Suspension des Polymer-Pigment-Hybrids enthält beispielsweise 5 bis 80 Gew.-% mindestens eines anorganischen Pigments, 1 bis 30 Gew.-% mindestens eines Bindemittels und 19 bis 94 Gew.-% Wasser.

Der Erfindung liegt die Aufgabe zugrunde, ein Verfahren zur Herstellung von füllstoffhaltigem Papier und Papierprodukten zur Verfügung zu stellen, wobei man gegenüber den bekannten Verfahren Füllstoffe enthaltende Papierprodukte mit einer verbesserten Festigkeit und/oder Bedruckbarkeit bei gleicher oder verbesserter Runnability der Papiermaschine erhält.

Die Aufgabe wird erfindungsgemäß gelöst mit einem Verfahren zur Herstellung von füllstoffhaltigen Papieren und füllstoffhaltigen Papierprodukten durch Zusatz einer wässrigen Anschlämmung mindestens eines feinteiligen Füllstoffs, der mit mindestens einem Bindemittel behandelt ist, zu einem Papierstoff und Entwässerns des Papierstoffs unter Blattbildung, wenn man als Füllstoff ein Polymer-Pigment-Hybrid einsetzt, das erhältlich ist durch Vermahlen einer wässrigen Anschlämmung mindestens eines anorganischen Pigments in Gegenwart mindestens eines Bindemittels und gegebenenfalls durch Trocknen der so erhältlichen wässrigen Anschlämmung und Redispergieren des getrockneten Polymer-Pigment-Hybrids in Wasser.

Die so erhältlichen wässrigen Anschlämmungen mindestens eines Polymer-Pigment-Hybrids werden in einer solchen Menge zum Papierstoff dosiert, dass man Papier oder Papierprodukte mit einem Füllstoffgehalt von 5 bis 60 Gew.-%, vorzugsweise 15 bis 40 Gew.-%, jeweils bezogen auf trockenen Papierstoff, erhält. Die wässrigen Anschlämmungen von Füllstoffen können sowohl dem Dickstoff als auch dem Dünnstoff bei der Papierherstellung zugesetzt werden. Sie können in Gegenwart der bei der Papierherstellung gebräuchlichen Additive wie Masseleimungsmittel, Fixiermittel, Entwässerungsmittel, Verfestiger, Retentionsmittel und/oder Farbstoffe, eingesetzt werden.

Die wässrigen, feinteiligen Pigment-Hybrid-Anschlämmungen können zur Herstellung sämtlicher füllstoffhaltiger Papierqualitäten eingesetzt werden, z.B. Zeitungsdruck, SC-Papiere (superkalandrierte Papiere), holzfreie oder holzhaltige Schreib- und Druckpapiere. Zur Herstellung solcher Papiere verwendet man beispielsweise als Hauptkomponenten Holzschliff, thermomechanischen Stoff (TMP), chemothermomechanischen Stoff (CTMP), biologisch chemothermomechanischen Stoff (BCTMP), Druckschliff (PGW) sowie Sulfit- und Sulfatzellstoff. Das Flächengewicht der füllstoffhaltigen Papiere beträgt beispielsweise 16 bis 600 g/m², vorzugsweise 50 bis 120 g/m². Unter Papierprodukten sollen beispielsweise Pappe und Karton verstanden werden, die ebenfalls durch Entwässern eines füllstoffhaltigen Papierstoffs hergestellt werden, jedoch gegenüber Papier ein höheres Flächengewicht und einen anderen Aufbau haben.

Um eine hohe Füllstoffretention zu erreichen, empfiehlt sich die Zugabe von Retentionsmitteln zum Papierstoff. Die Retentionsmittel können beispielsweise zum Dickstoff oder auch zum Dünnstoff zugegeben werden. Als Retentionsmittel verwendet man beispielsweise hochmolekulare Polyacrylamide (die Molmassen der Polymer liegen oberhalb von 2 Millionen), Polyethylenimine, Polyvinylamineinheiten enthaltende Polymere, insbesondere Polyvinylamin, oder man verwendet so genannte Mikropartikel-Systeme, wobei man zunächst ein polymeres kationisches Retentionsmittel zum Papierstoff gibt, den Papierstoff dann einer Scherung unterwirft und anschließend Bentonit oder feinverteilte Kieselsäure in Mengen bis zu 2 Gew.-%, bezogen auf trockenen Faserstoff, zusetzt. Gemäß einem anderen Mikropartikelverfahren dosiert man ein Mikropartikelsystem aus einem kationischen Polymeren und einer feinteiligen anorganischen Komponente zum Papierstoff erst nach der letzten Scherstufe vor dem Stoffauflauf.

Bei der Herstellung holzfreier Papiere kann man zum Papierstoff zusätzlich mindestens einen optischen Aufheller zugeben. Die Mengen an optischem Aufheller betragen beispielsweise 0,3 bis 3,0, vorzugsweise 0,6 bis 1,5 Gew.-%, bezogen auf trockenen Papierstoff.

Die Verwendung der Polymer-Pigment-Hybride bei der Papierherstellung hat den Vorteil, dass man Papiere erhält, die eine hohe Festigkeit, insbesondere eine hohe Oberflächenfestigkeit haben. Beim Einsatz solcher Papiere im Druck- oder Kopierprozess beobachtet man gegenüber in bekannter Weise hergestellten füllstoffhaltigen Papieren ein verringertes Stauben und eine geringere Ablagerung auf den Walzen. Mit Hilfe der Pigment-Hybride ist es möglich, Füllstoffe enthaltende Papiere herzustellen, die gegenüber Papieren, die mit anderen Pigmenten hergestellt wurden, aufgrund der höheren Festigkeiten einen signifikant höheren Füllstoffgehalt aufweisen. Dieser Vorteil wird sowohl bei holzfreien als auch bei holzhaltigen Papieren beobachtet. Füllstoffhaltige Papiere, die unter Verwendung von Pölymer-Pigment-Hybriden hergestellt wurden, benötigen wegen der hohen Oberflächenfestigkeit und der guten Tonerhaftung keine weitere Oberflächenveredlung, die sonst in der Leimpresse vorgenommen wird. Da man durch den Einsatz der Polymer-Pigment-Hybride die Porosität des Papiers steuern kann, ist es auch möglich, bei der Papierherstellung auch Fasern mit einem geringeren Mahlgrad wie sonst üblich einsetzten. Durch den gezielten Einsatz von Polymer-Pigment-Hybriden bei der Herstellung von mehrlagigen Papieren ist eine weitere Optimierung der Steifigkeit des so erhältlichen Papiers möglich.

Zur Herstellung eines Polymer-Pigment-Hybrids kann man beispielsweise so vorgehen, dass man eine 1 bis 80 gew.-%ige wässrige Anschlämmung mindestens eines anorganischen Pigments auf Basis von z.B. Metalloxiden, Silikaten und/oder Carbonaten, insbesondere von Pigmenten aus der Gruppe bestehend aus Titandioxid, Aluminiumoxid, Aluminiumhydroxide wie insbesondere Aluminiumtrihydroxid, Zinkoxid, Kaolin, Talk, Dolomit, Ton, Bentonit, Satinweiß, Calciumcarbonat, natürlich vorkommendes Calciumsulfat (Gips), Calciumsulfat aus chemischen Prozessen, und/oder Bariumsulfat in Gegenwart eines natürlichen und/oder synthetischen Bindemittels vermahlt. Es handelt sich hierbei um die üblicherweise als Füllstoff bei der Papierherstellung eingesetzten anorganischen Stoffe. Die meisten Füllstoffe sind natürlich vorkommende Mineralien oder Produkte, die in der Technik bei Produktionsprozessen entstehen wie Calciumsulfat oder präzipitiertes Calciumcarbonat. Die Pigmente bzw. Füllstoffe, die bei der Papierherstellung eingesetzt werden, werden in der Regel durch Zerkleinern von grobstückigen Mineralien gewonnen. Um Pigmente für die Papierherstellung zu erhalten, kann man die in Betracht kommenden Mineralien beispielsweise einer Trocken- und/oder einer Nassvermahlung unterwerfen. Für die Herstellung der Polymer-Pigment-Hybride geht man vorzugsweise von bereits vorher zerkleinertem Material aus, das beispielsweise eine mittlere Teilchengröße in dem Bereich von 1µm bis 2 mm, vorzugsweise 1 µm bis 100 µm, haben kann. Man stellt zunächst eine wässrige Anschlämmung der Pigmente her. Die Temperatur kann während des Vermahlens der Komponenten in einem weiten Bereich schwanken, z.B. 0 bis 95°C betragen. In den meisten Fällen liegt die Temperatur bei 15 bis 80°C, insbesondere bei 20 bis 55°C.

Die Pigmentkonzentration in der wässrigen Anschlämmung beträgt vorzugsweise 15 bis 60 Gew.-%. Zu dieser Anschlämmung gibt man dann mindestens ein natürliches und/oder synthetisches Bindemittel und unterwirft die Mischung anschließend einem Mahlvorgang, z.B. in einer Kugelmühle. Bevorzugt wird die Nassvermahlung der beiden Komponenten. Man erhält dann beispielsweise feinteilige Polymer-Pigment-Hybride mit einem mittleren Teilchendurchmesser von 0,01 bis 50 µm, z. B. auch von 0,1 bis 30 µm, im nassen Zustand.

Man kann die beiden Komponenten jedoch auch in trockenem Zustand vermahlen. Die wässrigen Anschlämmungen von Polymer-Pigment-Hybriden können getrocknet werden, z.B. durch Sprühtrocknung.

Die Polymer-Pigment-Hybride haben selbstbindende Eigenschaften wie im Beispiel 1 der FR-A 04 07 806, Beispiel 1, beschrieben ist.

Bei der Herstellung des Polymer-Pigment-Hybrids wird beispielsweise ein Gewichtsverhältnis von anorganischem Pigment zu Bindemittel zwischen 99,9 und 1, vorzugsweise zwischen 70 und 30 gewählt. Die wässrige Suspension des Polymer-Pigment-Hybrids enthält meistens 5 bis 80 Gew.-%, vorzugsweise 20 bis 40 Gew.-% mindestens eines anorganischen Pigments, 0,1 bis 30 Gew.-%, vorzugsweise 5 bis 20 Gew.-% mindestens eines Bindemittels und 19 bis 94 Gew.-%, vorzugsweise 40 bis 75 Gew.-% Wasser.

Besonders bevorzugt sind Polymer-Pigment-Hybride, zu deren Herstellung man als anorganisches Pigment Calciumcarbonat in Form von Kalk, Kreide, Calcit, Marmor und/oder präzipitiertem Calciumcarbonat einsetzt.

Zur Herstellung von Polymer-Pigment-Hybriden kann man natürliche und/oder synthetische Bindemittel einsetzen. Beispiele für natürliche Bindemittel sind Stärke, Kasein, der Proteine, Carboxymethylcellulose und/oder Ethylhydroxyethylcellulose.

Als synthetische Bindemittel kommen beispielsweise Polymere in Betracht, die zu mindestens 40 Gew.-% aus sogenannten Hauptmonomeren, ausgewählt aus C₁- bis C₂₀-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und ein oder zwei Doppelbindungen oder Mischungen dieser Monomeren aufgebaut ist.

Als synthetische Polymere kommen insbesondere Polymere in Betracht, die durch radikalische Polymerisation von ethylenisch ungesättigten Verbindungen (Monomere) erhältlich sind.

Vorzugsweise handelt es sich bei dem Bindemittel um ein Polymer, das zu mindestens 40 Gew.-%, bevorzugt zu mindestens 60 Gew.-%, besonders bevorzugt zu mindestens 80 Gew.-% aus sogenannten Hauptmonomeren besteht.

Die Hauptmonomeren sind ausgewählt aus C₁-C₂₀-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und ein oder zwei Doppelbindungen oder Mischungen dieser Monomeren.

Zu nennen sind z. B. (Meth)acrylsäurealkylester mit einem C₁-C₁₀-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z. B. Vinyllaurat, -stearat, Vinylpropionat, Versaticsäurevinylester und Vinylacetat.

Als vinylaromatische Verbindungen kommen Vinyltoluol, α- und p-Methylstyrol, α-Butylstyrol, 4-n-Butylstyrol, 4-n-Decylstyrol und vorzugsweise Styrol in Betracht. Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als Vinylether zu nennen sind z. B. Vinylmethylether oder Vinylisobutylether. Bevorzugt wird Vinylether von 1 bis 4 C-Atome enthaltenden Alkoholen.

Als Kohlenwasserstoffe mit 2 bis 8 C-Atomen und ein oder zwei olefinischen Doppelbindungen seien Ethylen, Propylen, Butadien, Isopren und Chloropren genannt.

Bevorzugte Hauptmonomere sind C₁-C₁₀-Alkyl(meth)acrylate und Mischungen der Alkyl (meth)acrylate mit Vinylaromaten, insbesondere Styrol, (Polymere mit diesen Hauptmonomeren werden zusammenfassend kurz Polyacrylate genannt) oder, alternativ, Kohlenwasserstoffe mit 2 Doppelbindungen, insbesondere Butadien, oder Gemische von derartigen Kohlenwasserstoffen mit Vinylaromaten, insbesondere Styrol (Polymere mit diesen Hauptmonomeren werden zusammenfassend kurz Polybutadiene genannt).

Bei Gemischen von aliphatischen Kohlenwasserstoffen (insbesondere Butadien) mit Vinylaromaten (insbesondere Styrol) kann das Verhältnis z. B. zwischen 10:90 bis 90:10, insbesondere 20:80 bis 80:20 liegen.

Neben den Hauptmonomeren kann das Polymer Monomere mit mindestens einer Säuregruppe enthalten (kurz Säure-Momomer), z. B. Monomere mit Carbonsäure, Sulfonsäure oder Phosphonsäuregruppen. Bevorzugt sind Carbonsäuregruppen. Genannt seien z. B. Acrylsäure, Methacrylsäure, Itaconsäure, Maleinsäure oder Fumarsäure.

Weitere Monomere sind darüber hinaus z. B. auch Hydroxylgruppen enthaltende Monomere, insbesondere C₁-C₁₀-Hydroxyalkyl(meth)acrylate, (Meth)acrylamid.

Besonders bevorzugte Polymere sind demnach im Falle der Polybutadiene aufgebaut aus
10 bis 90 Gew.-%, vorzugsweise 20 bis 70 Gew.-%, aliphatische Kohlenwasserstoffe mit zwei Doppelbindungen, insbesondere Butadien
10 bis 90 Gew.-%, vorzugsweise 30 bis 80 Gew.-%, vinylaromatische Verbindungen, insbesondere Styrol
0 bis 20 Gew.-%, vorzugsweise 0 bis 10 Gew.-% Säure-Monomer
0 bis 20 Gew.-%, vorzugsweise 0 bis 10 Gew.-% weitere Monomere
oder alternativ im Falle der Polyacrylate aus
10 bis 95 Gew.-%, vorzugsweise 30 bis 95 Gew.-%, C₁- bis C₁₀-Alkyl(meth)acrylate, 0 bis 60 Gew.-%, vorzugsweise 0 bis 50 Gew.-%, vinylaromatische Verbindungen, insbesondere Styrol und
0 bis 20 Gew.-%, vorzugsweise 0 bis 10 Gew.-% Säure-Monomer sowie
0 bis 20 Gew.-%, vorzugsweise 0 bis 10 Gew.-% weitere Monomere.

Sowohl die Polybutadiene als auch die Polyacrylate enthalten bevorzugt Säure-Monomere als Comonomere, vorzugsweise in einer Menge von 1 bis 5 Gew.-%. Die Maximalmenge der obigen aliphatischen Kohlenwasserstoffe bei den Polybuadienen bzw. der Alkyl(meth)acrylate bei den Polyacrylaten erniedrigt sich entsprechend um den Minimalbetrag der Säure-Monomere.

Die Herstellung der Polymere erfolgt in einer bevorzugten Ausführungsform durch Emulsionspolymerisation, es handelt sich daher um ein Emulsionspolymerisat. Die Polymerisate können jedoch z. B. auch durch Lösungspolymerisation und anschließende Dispergierung der Polymerlösung in Wasser hergestellt werden.

Bei der Emulsionspolymerisation werden üblicherweise ionische und/oder nichtionische Emulgatoren und/oder Schutzkolloide bzw. Stabilisatoren als grenzflächenaktive Verbindungen verwendet.

Die grenzflächenaktive Substanz wird beispielsweise in Mengen von 0,1 bis 10 Gew.-%, bezogen auf die zu polymerisierenden Monomeren, verwendet.

Wasserlösliche Initiatoren für die Emulsionspolymerisation sind z. B. Ammonium- und Alkalimetallsalze der Peroxidischwefelsäure, z. B. Natriumperoxodisulfat, Wasserstoffperoxid oder organische Peroxide, z. B. tert-Butylhydroperoxid.

Geeignet sind auch sogenannte Reduktions-Oxidations(Red-Ox)-Initiator Systeme.

Die Menge der Initiatoren beträgt im allgemeinen 0,1 bis 10 Gew.-%, bevorzugt 0,5 bis 5 Gew.-%, bezogen auf die zu polymerisierenden Monomeren. Es können auch mehrere, verschiedene Initiatoren bei der Emulsionspolymerisation Verwendung finden.

Bei der Polymerisation können Regler eingesetzt werden, z. B. in Mengen von 0 bis 0,8 Gew. Teile, bezogen auf 100 Gew. Teile der zu polymerisierenden Monomeren, durch die die Molmasse verringert wird. Geeignet sind z. B. Verbindungen mit einer Thiolgruppe wie tert.-Butylmercaptan, Thioglycolsäureethylacrylester, Mercaptoethynol, Mercaptopropyltrimethoxysilan oder tert.-Dodecylmercaptan.

Die Emulsionspolymerisation erfolgt in der Regel bei 30 bis 130°C, vorzugsweise 50 bis 90°C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozeß als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt. Bei der Polymerisation kann auch z. B. zur besseren Einstellung der Teilchengröße eine Polymersaat vorgelegt werden.

Die Art und Weise, in der der Initiator im Verlauf der radikalischen wässrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wässrigen Emulsionspolymerisation kontinuierlich oder stufenweise eingesetzt werden. Im Einzelnen hängt dies von der chemischen Natur des Initiatorsystems als auch von der Polymersiationstemperatur ab. Vorzugsweise wird ein Teil vorgelegt und der Rest nach Maßgabe des Verbrauchs der Polymerisationszone zugeführt.

Zur Entfernung der Restmonomeren wird üblicherweise auch nach dem Ende der eigentlichen Emulsionspolymerisation, d. h. nach einem Umsatz der Monomeren von mindestens 95%, Initiator zugesetzt.

Die einzelnen Komponenten können dem Reaktor beim Zulaufverfahren von oben, in der Seite oder von unten durch den Reaktorboden zugegeben werden.

Bei der Emulsionspolymerisation werden wässrige Dispersionen des Polymeren in der Regel mit Feststoffgehalten von 15 bis 75 Gew.-%, bevorzugt von 40 bis 75 Gew.-% erhalten.

Als Bindemittel eignen sich insbesondere auch Gemische von verschiedenen Bindemitteln, z. B. auch Gemische von synthetischen und natürlichen Polymeren. Bevorzugt werden wässrige Polymerdispersionen als Bindemittel eingesetzt, die zu mindestens 60 Gew.-% aus Butadien oder Mischungen aus Butadien und Styrol aufgebaut sind oder wässrige Dispersionen von Polymeren, die mindestens 60 Gew.-% C₁- bis C₂₀-Alkyl(meth)acrylate oder Mischungen von C₁- bis C₂₀-Alkyl(meth)acrylaten mit Styrol einpolymerisiert enthalten.

Weitere geeignete Bindemittel sind Vinylformamid- und/oder Vinylamineinheiten enthaltende Polymere, die eine mittlere Molmasse M_{w} von mindestens 10 000 haben. Diese Polymere können als wässrige Dispersion oder als Lösung in Wasser vorliegen. Sie werden beispielsweise durch Polymerisieren von N-Vinylformamid allein oder in Gegenwart mindestens eines anderen nichtionischen, kationischen und/oder anionischen Monomeren hergestellt. Die so herstellbaren Homo- und Copolymerisate von N-Vinylformamid können in einer polymeranalogen Reaktion unter Abspaltung von Formylgruppen aus den einpolymerisierten Vinylformamideinheiten unter Bildung von Aminogruppen hydrolyisert werden. Die Hydrolyse erfolgt vorzugsweise in wässrigem Medium in Gegenwart mindestens einer Säure wie Salzsäure oder Schwefelsäure, enzymatisch oder in Gegenwart von Basen wie Natronlauge oder Kalilauge. Die Vinylformamideinheiten können vollständig oder auch nur teilweise hydrolysiert sein. So erhält man z.B. bei einer vollständigen Hydrolyse von Homopolymerisaten des N-Vinylformamids Polyvinylamine.

Als anionische Monomere kommen beispielsweise Säuregruppen enthaltende Monomere in Betracht. Beispiele hierfür sind Acrylsäure, Methacrylsäure, Maleinsäure, Fumarsäure, Itaconsäure, Vinylphosphonsäure, Acrylamido-2-methyl-propansulfonsäure, Styrolsulfonsäure, Allylessigsäure, Crotonsäure und Ethacrylsäure. Die anionischen Monomeren können bei der Polymerisation in Form der freien Säuren oder in partiell oder in vollständig mit Alkälimetall-, Erdalkalimetall- und/oder Ammoniumbasen neutralisierter Form eingesetzt werden. Vorzugsweise kommen die Natriumsalze oder Kaliumsalze der Säuren in Betracht. Sowohl die nicht hydrolysierten Copolymerisate von N-Vinylformamid mit anionischen Monomeren als auch die teilweise oder vollständig hydrolysierten Copolymerisate von N-Vinylformamid und anionischen Monomeren, die beispielsweise in der zum Stand der Technik genannten DE-A 103 15 363 beschrieben werden, vgl. insbesondere Seite 5, Zeile 39 bis Seite 12, Zeile 39, können als Bindemittel zur Modifizierung von anorganischen Pigmenten eingesetzt werden.

N-Vinylformamid kann auch mit kationischen Monomeren wie Dialkylaminoalkyl(meth)acrylaten und/oder Diallyldimethylammoniumchlorid copolymerisiert werden. Die basischen Monomeren werden dabei vorzugsweise in Form der Salze mit Mineralsäuren oder in partiell oder vollständig mit Alkylhalogeniden oder mit Dimethylsulfat quaternierter Form eingesetzt. Bei der Copolymerisation von N-Vinylformamid mit anionischen und/oder kationischen Monomeren können gegebenenfalls zusätzlich nichtionische Monomere wie Methylacrylat, Ethylacrylat, Methylmethacrylat, Vinylacetat, Acrylamid und/oder Methacrylamid eingesetzt werden. Sowohl die hydrolysierten kati onischen als auch die nichthydrolysierten kationischen Copolymerisate können als Bindemittel zur Modifizierung von anorganischen Pigmenten eingesetzt werden. Ebenso kann man amphotere Polymere verwenden, die beispielsweise durch Copolymerisation von N-Vinylformamid, Dimethylaminoethylacrylatmethochlorid und Acrylsäure erhältlich sind oder die durch vollständige oder teilweise Hydrolyse der Vinylformamideinheiten dieser Copolymerisate entstehen. Die Vinylformamid- und/oder Vinylamineinheiten enthaltenden Polymerisate, die zur Modifizierung von Pigmenten eingesetzt werden, haben vorzugsweise eine mittlere Molmasse M_{w} von mindestens 20 000. Meistens liegen die mittleren Molmassen der Copolymerisate in dem Bereich von 30 000 bis 5 Millionen, insbesondere von 50 000 bis 2 Millionen. Die Molmassen werden beispielsweise mit Hilfe der statischen Lichtstreuung bei pH 7,6 in einer 10 mmolaren wässrigen Kochsalzlösung bestimmt.

Polymer-Pigment-Hybride entstehen auch, wenn man die aus der DE-A 102 09 448 und der DE-A 103 15 363 bekannten wässrigen Anschlämmungen von feinteiligen Füllstoffen, die zumindest teilweise mit Polymeren überzogen sind und durch Mischen von wässrigen Anschlämmungen feiteiliger Füllstoffe mit mindestens einem polymeren Bindemittel oder mit mindestens einem wasserlöslichen amphoteren, hydrolysierten Copolymerisat aus N-Vinylformamid und mindestens einer ethylenisch ungesättigten Carbonsäure mit 3 bis 8 C-Atomen und/oder deren Alkalimetall-, Erdalkalimetall- oder Ammoniumsalzen erhältlich sind, trocknet z.B. bei Temperaturen von >95 bis 140°C, vorzugsweise bei 100 bis 120°C, das getrocknete Produkt gegebenenfalls zerkleinert und siebt und das so erhältliche Pulver mit einer mittleren Teilchengröße von ca. 1 bis 10 µm in Wasser dispergiert.

Das Vermahlen von anorganischen Pigmenten in wässrigem Medium in Gegenwart mindestens eines Bindemittels zur Herstellung der erfindungsgemäß zu verwendenden Polymer-Pigment-Hybride kann auch mit Vorteil zusätzlich in Gegenwart von Polyethylenwachsen und gegebenenfalls mindestens eines Dispergiermittels durchgeführt werden. Als Dispergiermittel eignen sich insbesondere Polyacrylsäuren, die durch Polymerisieren von Acrylsäure in Isopropanol unter erhöhtem Druck bei Temperaturen bis zu 140°C erhältlich sind. Die als Dispergiermittel in Betracht kommenden Polyacrylsäuren haben eine mittlere Molmasse M_{w} von beispielsweise 1000 bis 50 000, vorzugsweise 2000 bis 30 000. Falls man beim Vermahlen der Pigmente zusätzlich Polyethylenwachse einsetzt, verwendet man sie beispielsweise in Mengen von 0,1 bis 10, vorzugsweise 1 bis 5 Gew.-%, bezogen auf anorganisches Pigment. Polyethylenwachse sind bekannt. Sie werden beispielweise durch Polymerisieren von Ethylen und mindestens einer ethylenisch ungesättigten Carbonsäure hergestellt. Insbesondere eignen sich Polyethylenwachse, die erhältlich sind durch Copolymerisieren von
(A) 26,1 bis 39 Gew.-%, bevorzugt 26,3 bis 35 Gew.-%, besonders bevorzugt 26,5 bis 38,9 Gew.-% mindestens einer ethylenisch ungesättigten Carbonsäure und
(B) 61 bis 73,9 Gew.-%, bevorzugt 65 bis 73,7, besonders bevorzugt 70 bis 73,5 Gew.-% Ethylen.

Außerdem eignen sich Ethylencopolymerwachse, die
(A') 20,5 bis 38,9 Gew.-%, bevorzugt 21 bis 28 Gew.-% mindestens einer ethylenisch ungesättigten Carbonsäure,
(B') 60 bis 79,4 Gew.-%, bevorzugt 70 bis 78,5 Gew.-% Ethylen und
(C') 0,1 bis 15 Gew.-%, bevorzugt 0,5 bis 10 Gew.-% mindestens eines ethylenisch ungesättigten Carbonsäureesters
einpolymerisiert enthalten.

Die oben beschriebenen Ethylencopolymerwachse haben beispielsweise eine Schmelzemassefließrate (MFR) im Bereich von 1 bis 50 g/10 min, bevorzugt 5 bis 20 g/10 min, besonders bevorzugt 7 bis 15 g/10 min auf, gemessen bei 160°C und einer Belastung von 325 g nach EN ISO 1133. Ihre Säurezahl beträgt üblicherweise 100 bis 300 mg KOH/g Wachs, bevorzugt 115 bis 230 mg KOH/g Wachs, bestimmt nach DIN 53402.

Sie weisen eine kinematische Schmelzeviskosität 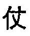 von mindestens 45.000 mm²/s auf, bevorzugt von mindestens 50.000 mm²/s. Die Schmelzbereiche der Ethylencopolymerwachse liegen beispielsweise im Bereich von 60 bis 110°C, bevorzugt im Bereich von 65 bis 90°C, bestimmt durch DSC nach DIN 51007.

Die Schmelzbereiche der Ethylencopolymerwachse können breit sein und ein Temperaturintervall von mindestens 7 bis höchstens 20°C, bevorzugt mindestens 10°C und höchstens 15°C haben.

Die Schmelzpunkte der Ethylencopolymerwachse können jedoch auch eine geringe Schwankungsbreite haben und in einem Temperaturintervall von weniger als 2°C, bevorzugt weniger als 1°C liegen, bestimmt nach DIN 51007.

Die Dichte der Wachse beträgt üblicherweise 0,89 bis 1,10 g/cm³, bevorzugt 0,92 bis 0,99 g/cm³, bestimmt nach DIN 53479.
In den erfindungsgemäß verwendeten Dispersionen eingesetzte Ethylencopolymerwachse können alternierende Copolymere sein oder Blockcopolymere oder vorzugsweise statistische Copolymere.

Ethylencopolymerwachse aus Ethylen und ethylenisch ungesättigten Carbonsäuren und gegebenenfalls ethylenisch ungesättigten Carbonsäureestern können vorteilhaft durch radikalisch initiierte Copolymerisation unter Hochdruckbedingungen hergestellt werden, beispielsweise in gerührten Hochdruckautoklaven oder in Hochdruckrohrreaktoren. Die Herstellung in gerührten Hochdruckautoklaven ist bevorzugt. Gerührte Hochdruckautoklaven sind an sich bekannt, eine Beschreibung findet man in Ullmann's Encyclopedia of Industrial Chemistry, 5. Auflage, Stichworte: Waxes, Bd. A 28, S. 146 ff., Verlag Chemie, Weinheim, Basel, Cambridge, New York, Tokio, 1996. Bei ihnen verhält sich überwiegend das Verhältnis Länge/Durchmesser in Intervallen von 5:1 bis 30:1, bevorzugt 10:1 bis 20:1. Die gleichfalls anwendbaren Hochdruckrohrreaktoren findet man ebenfalls in Ullmann's Encyclopedia of Industrial Chemistry, 5. Auflage, Stichworte: Waxes, Bd. A 28, S. 146 ff., Verlag Chemie, Weinheim, Basel, Cambridge, New York, Tokio, 1996.

Geeignete Druckbedingungen für die Polymerisation sind 500 bis 4000 bar, bevorzugt 1500 bis 2500 bar. Bedingungen dieser Art werden im Folgenden auch als Hochdruck bezeichnet. Die Reaktionstemperaturen liegen im Bereich von 170 bis 300°C, bevorzugt im Bereich von 195 bis 280°C. Die Polymerisation kann man auch in Gegenwart eines Reglers durchführen. Die oben genannten Wachse werden beispielsweise in der WO 04/108601, Seite 2, Zeile 38 bis Seite 12, Zeile 10, ausführlich beschrieben.

Gegenstand der Erfindung ist außerdem die Verwendung von wässrigen Anschlämmungen von Polymer-Pigment-Hybriden, die erhältlich sind
(i) durch Vermahlen einer wässrigen Anschlämmung mindestens eines anorganischen Pigments in Gegenwart mindestens eines Bindemittels oder
(ii) durch Trocknen der gemäß (i) erhältlichen wässrigen Anschlämmung und Redispergieren des getrockneten Polymer-Pigment-Hybrids in Wasser,
als Zusatz zum Papierstoff zur Herstellung von füllstoffhaltigem Papier, füllstoffhaltigem Karton oder füllstoffhaltiger Pappe durch Entwässern des Papierstoffs unter Blattbildung.

Bei dem erfindungsgemäßen Verfahren zur Herstellung von Papier oder Papierprodukten können gegebenenfalls neben den Polymer-Pigment-Hybriden auch organische Pigmente, wie sie z. B. in WO 01/00712 und WO 01/00713 beschrieben sind, mitverwendet werden. Der Anteil organischer Pigmente ist vorzugsweise kleiner 20 Gew.-Teile, insbesondere kleiner 10 Gew.-Teile, besonders bevorzugt kleiner 5 Gew.-Teile, bezogen auf 100 Gew.-Teile Polymer-Pigment-Hybrid.

Bindemittel und anorganisches Pigment liegen zumindest zum Teil in Form von Pigment-Polymer-Hybriden vor. In diesen Hybriden ist das organische Polymer bzw. Bindemittel chemisch oder physikalisch an das anorganische Pigment gebunden. Insbesondere ist das Bindemittel an der Pigmentoberfläche adsorbiert.

Bei den Pigment-Polymer-Hybriden handelt es sich um eine eigenständige Teilchensorte mit einheitlicher Dichte. Bei Messung der Dichte der Pigment-Polymer-Hybride mit einer Ultrazentrifuge nach der Methode des statischen Dichtegradienten (bei 21 °C und 1 bar) wird nur eine Dichte, d. h. eine Teilchensorte, ermittelt. Die Meßmethode zur Bestimmung des statischen Dichtegradienten ist z. B. in W. Mächtle, M. D. Lechner, Progr.Colloid Polym.Sci (2002) 119,1 beschrieben.

Zur Untersuchung einer Probe im Statischen Dichtegradient (Stat. DG) wird eine Mischung aus leichtem Lösemittel und schwerem Lösemittel oder Zusatzstoff (i.d.R. Metrizamid/H₂O, Metrizamid/D₂O) bei moderaten Rotordrehzahlen für mindestens 22 Stunden zentrifugiert. Das unterschiedliche Sedimentations- und Diffusionsverhalten von schwerem und leichten Agens führt zur Ausbildung eines Konzentrations- und damit eines Dichtegradient über die Zelle. Jede radiale Position der Messzelle weist daher eine andere Lösungsmitteldichte auf. Die Probe bzw. die chemisch unterschiedlichen Komponenten der Probe sedimentieren oder flotieren innerhalb dieses Dichtegradienten genau an die radiale Position, an welcher ein ihrer Partikeldichte entsprechendes Mischungsverhältnis von leichtem und schwerem Agens vorliegt. Damit ist eine hochgenaue Fraktionierung von Proben nach der Dichte und damit der chemischen Zusammensetzung möglich.

Da sich in dem untersuchten System Polymer (ca. 1 g/cm³), Calciumcarbonat (2,6 bis 2,95 g/cm³, je nach Modifikation) und Polymer/Carbonat-Hybrid die Dichten der Partikel gravierend unterscheiden, kann über Messungen der Hybride in geeigneten statischen Dichtegradienten der Nachweis von freiem Polymer bzw. der Ausschluss von freiem Polymer erfolgen.

Die Pigment-Polymerhybride können neben Bindemittel und anorganischem Pigment weitere Bestandteile enthalten, z. B. Dispergierhilfsmittel wie mindestens eine Polycarbonsäure oder deren Salze, insbesondere Polyacrylsäure, oder Polyphosphorsäure. Die wässrige Suspension des Polymer-Pigment-Hybrids kann gegebenenfalls 0,01 bis 2 Gew.-% mindestens eines Dispergiermittels enthalten.

### Beispiele

Die Prozentangaben in den Beispielen bedeuten Gewichtsprozent, sofern aus dem Zusammenhang nichts anderes hervorgeht.

Das Polymer-Pigment-Hybrid gemäß Anschlämmung 1 wurde nach der Lehre der FR-A 04 07 806 der Firma Omya hergestellt.

Die unter Anschlämmung 1 und Anschlämmung 2 hergestellten wässrigen Anschlämmungen von Füllstoffen wurden im Beispiel 1 sowie in den Vergleichsbeispielen 1 und 2 jeweils auf Ihre Eignung zur Herstellung füllstoffhaltiger Papiere geprüft. Die dabei erhaltenen Ergebnisse sind in Tabelle 2 zusammengefasst.

Die Charakterisierung der Polymer-Pigment-Hybride erfolgte nach der oben beschriebenen Methode des statistischen Dichtegradienten.

Die mittlere Teilchengröße der Pigmente bzw. der Polymer-Pigment-Hybride wurde auf Basis der Fraunhoferbeugung mittels eines Beckman Coulter Counter Geräts des Typs LS 230 bestimmt.

Die Probenpräparation der Teilchengrößenverteilungsmessung wurde wie folgt durchgeführt:
- 0,4 g von Polysalz S (Dispergiermittel auf Basis von Polyacrylsäure) wurde zu 90 ml einer 0,1 Gew.-%igen Natriumpyrophosphat Lösung zugegeben.
- 4 g des Pigments bzw. Polymer-Pigment-Hybrids wurden zu 90 ml einer 0,1 gew.-%igen Natriumpyrophosphat zugegeben.
- Das restliche Volumen wurde mittels einer 0,2 gew.-%igen Natriumpyrophosphat Lösung auf 100 ml aufgefüllt.
- Die Probe wurde 3 Minuten gerührt und anschließend für 10 Minuten mit Ultraschall behandelt und danach mit Hilfe des Beckman Coulter Counter Gerätes vermessen.

### Anschlämmung 1

200 kg eines Calciumcarbonat Pulvers mit einer mittleren Teilchengröße D 50 von 7,0 µm wurden durch langsames Einrühren mittels eines Blattrührers in 1000 Liter Wasser suspendiert. Anschließend wurden 38 kg einer 50 %igen handelsüblichen wässrigen Styrol-Acrylat-Dispersion (Acronal® S 728) in die Calciumcarbonat-Slurry unter ständigem Rühren zugemischt. Zusätzlich wurden 4 kg einer 25 %-igen handelsüblichen wässrigen Dispersion eines Polyethylenwachses (Poligen® WE 4) in die Calciumcarbonat-Slurry unter fortwährendem Rühren eingemischt. Danach wurde die Slurry durch Verdünnung mit Trinkwasser auf einen Feststoffgehalt von 20 % verdünnt. Sie hatte einen pH Wert von 8,5.

Diese 20 %ige Pigmentanschlämmung wurde dann in einer Kugelmühle bis auf eine mittlere Teilchengröße von 2,5 µm vermahlen. Bei der Untersuchung der so erhaltenen wässrigen Anschlämmung, bei der es sich um ein Polymer-Pigment-Hybrid handelte, wurde mit Hilfe der Ultrazentrifuge kein freies Bindemittel gefunden.

### Anschlämmung 2 (gemäß der Lehre der DE-A 102 09 448)

200 kg eines Calciumcarbonat Pulvers (Omyacarb® 2 AV) mit einer mittleren Teilchengröße D 50 von 2,4 µm wurden durch langsames Einrühren mittels eines Blattrührers in 1000 Liter Wasser suspendiert. Anschließend wurden 38 kg einer 50 %igen handelsüblichen wässrigen Styrol-Acrylat-Dispersion (Acronal® S 728) in die Calciumcarbonat-Slurry unter ständigem Rühren zugemischt. Außerdem wurden 4 kg einer 25 % igen handelsüblichen wässrigen Dispersion eines Polyethylenwachses (Poligen® WE 4) in die Calciumcarbonat Slurry unter fortwährendem Rühren eingemischt. Danach wurde die Slurry durch Zugabe von Trinkwasser auf einen Feststoffgehalt von 20% verdünnt. Sie hatte einen pH Wert von 8,5.

Bei der Untersuchung der so erhaltenen wässrigen Anschlämmung mit Hilfe der Ultrazentrifuge wurde 100 % freies Polymer (Acronal® S 728 und Poligen® WE 4) in der Polymer-Pigment-Mischung gefunden.

### Anschlämmung 3 (gemäß der Lehre der DE-A 103 15 363)

Zu 2000 kg einer 50 %igen Calciumcarbonat Slurry (Omyacarb® HO) mit einer mittleren Teilchengröße D 50 von 1,0 µm wurden 227 kg einer 11 %igen Lösung eines handelsüblichen amphoteren Copolymerisats (Catiofast® PR 8236) unter ständigem Rühren gemischt. Danach wurde die Slurry durch Zugabe von Trinkwasser auf einen Feststoffgehalt von 20 % verdünnt. Sie hatte einen pH-Wert von 8,5.

### Allgemeine Vorschrift zur Herstellung von füllstoffhaltigem Papier

Eine Mischung aus gebleichter Birke und Kiefer wurde jeweils im Gewichtsverhältnis von 70/30 bei einer Feststoffkonzentration von 8 % im Pulper stippenfrei aufgeschlagen. Ein Mahlgrad von 30 °Schopper-Riegler wurde eingestellt. Der pH-Wert des Papierstoffs lag dabei im Bereich von 7 bis 8. Der gemahlene Papierstoff wurde anschließend mit Trinkwasser auf eine Feststoffkonzentration von ca. 1 % verdünnt.

Als kationische Stärke wurde Hicat® 5163 A mit einer Dosierung von 8 kg pro Tonne trockenes Papier eingesetzt.

Als optischer Aufheller wurde Blankophor® PSG mit einer Dosierung von 3 kg pro Tonne Papier eingesetzt.

Als Retentionsmittel wurde ein kationisches Retentionsmittel (Polymin® KE 2020) verwendet, wobei die Dosiermenge des Retentionsmittels bei jedem Versuch konstant blieb (0,02 kg pro Tonne trockenes Papier). Die Füllstoffmengendosierung wurde solange variiert bis der Aschegehalt der mit dem Stoff gefertigtem Papier 30 % betrug.

Als Leimungsmittel wurde eine AKD (Alkylketendimer) Dispersion (Basoplast® 2009 LC) verwendet, wobei die Dosiermenge des Leimungsmittels bei jedem Versuch so eingestellt wurde, dass der Cobb (60) Wert 30 g/m² betrug.

Der oben beschriebene Papierstoff wurde dann jeweils in einer Versuchspapiermaschine zu einem Papier mit einem Flächengewicht von 80 g/m² verarbeitet. Nach dieser Vorschrift wurden 3 Papiere hergestellt, die sich nur in der Art des jeweils eingesetzten Füllstoff unterschieden.
- Papier 1:: Als Füllstoff wurde ein handelsübliches Calciumcarbonat (Omyacarb® 2 AV) in wässriger Anschlämmung eingesetzt (Vergleichsbeispiel 1)
- Papier 2:: Gemäß Beispiel 1 wurde das Polymer-Pigment-Hybrid gemäß Anschlämmung 1 eingesetzt.
- Papier 3:: Als Füllstoff wurde gemäß Vergleichsbeispiel 2 die Mischung gemäß Anschlämmung 2 (hergestellt gemäß der Lehre der DE-A-102 09 448) eingesetzt.
- Papier 4:: Als Füllstoff wurde gemäß Vergleichsbeispiel 3 die Mischung gemäß Anschlämmung 3 (hergestellt gemäß der Lehre der DE- A 103 15 363) eingesetzt.

Tabelle 1 gibt einen Überblick über die Herstellung der Papiere 1 bis 3 mit einem Füllstoffgehalt von jeweils 30%.

**Tabelle 1**

| | Vergleichs-Bsp. 1 | Beispiel 1 | Vergleichs-Bsp. 2 | Vergleich-Bsp. 3 |
|---|---|---|---|---|
| 70/30 Birke/Kiefer - holzfrei | 100 | 100 | 100 | 100 |
| Omyacarb®2 AV [% im Papier] | 30 | | | |
| Polymer-Pigment-Hybrid aus Anschlämmung 1 [% im Papier] | | 30 | | |
| Anschlämmung 2 [% im Papier] | | | 30 | |
| Anschlämmung 3 [% im Papier] | | | | 30 |

| Basoplast® 2009 LC | Auf Cobb 30 g/m2 angepasst | Auf Cobb 30 g/m2 angepasst | Auf Cobb 30 g/m2 angepasst | Auf Cobb 30 g/m2 angepasst |
|---|---|---|---|---|
| Hicat® 5163 A [kg/t] | 8 | 8 | 8 | 8 |
| Blankophor® PSG [kg/t] | 3 | 3 | 3 | 3 |
| Polymin® KE 2020 [kg/t] | 0,2 | 0,2 | 0,2 | 0,2 |
| Papier Nr. | 1 | 2 | 3 | 4 |

Die Laufeigenschaften während der Herstellung der Papiere wurde qualitativ anhand von Ablagerungen in der Nass- und Trockenpartie der Papiermaschine, sowie anhand der Schaumneigung in dem Siebwasserbehälter und der Abrisshäufigkeit während der Versuche bewertet. Die Ergebnisse sind in Tabelle 3 angegeben.

### Prüfung der Papierblätter

Nach einer Lagerzeit im Klimaraum bei konstant 23 °C und 50 % Luftfeuchtigkeit für 24 Stunden wurden folgende Papierprüfungen durchgeführt:
Falzbruchwiderstand gemäß ISO 5626
Weiterreißarbeit gemäß DIN 53115
Gefügefestigkeit gemäß ISO TC 6 / SC 2
Scott Bond gemäß DIN 20 187
Taber Test gemäß DIN 53 863/1
Porosität Bendtsen gemäß ISO 5636-3
Opazität gemäß DIN 53146
Tonerhaftung gemäß DIN V EN V 12 283.

Die dabei erhaltenen Ergebnisse sind in Tabelle 2 zusammengefasst.

**Tabelle 2**

| Papier Nr. | 1 | 2 | 3 | 4 |
|---|---|---|---|---|
| Beispiel Nr. | | 1 | | |
| Vergleichsbsp. Nr. | 1 | | 2 | 3 |
| Falzbruchwiderstand längs mN | 32,8 | 54,6 | 50,4 | 30,9 |
| Falzbruchwiderstand quer mN | 22,6 | 33,2 | 30,7 | 27,6 |
| Weiterreißarbeit längs Nm | 870 | 1108 | 986 | 912 |
| Weiterreißarbeit quer Nm | 904 | 1162 | 1078 | 950 |
| Zwick - Gefügefestigkeit N | 350,8 | 567 | 580,9 | 378 |
| Scott Bond quer Mj | 157 | 416 | 302 | 181 |
| Porosität - Bendtsen ml/min | 454 | 134 | 265 | 353 |
| Opazität | 89,01 | 87,8 | 85,8 | 88,4 |
| Taber - OS mg | 100 | 17,5 | 31,5 | 56 |
| Taber - US mg | 123 | 26 | 44 | 84 |
| Tonerhaftung | 44 | 72 | 62 | 70 |

**Tabelle 3**

| Laufeigenschaften der Papiermaschine während der Herstellung der Papiere | | | | |
|---|---|---|---|---|
| Papier | 1 | 2 | 3 | 4 |
| | GCC 30% | Hybrid 30% | Mischung 30 | Amphoteres Polymer 30% |
| Ablagerungsneigung Pressenpartie | keine Ablagerung | keine Ablagerung | deutliche Ablagerung | keine Ablagerung |
| Schaumneigung | keine | keine | keine | keine |
| Abrisse | keine | keine | keine | keine |

Die Papiere 1 bis 4 weisen vergleichbare Flächengewichte und Aschegehalte auf. Sie sind diesbezüglich untereinander vergleichbar.

Wie aus den Papierprüfungen zu erkennen ist, zeigen die Polymer-Pigment-Hybrid enthaltenden Papieren (Beispiel 1 bzw. Papier 2) im Vergleich zu einem Papier gemäß Vergleichsbeispiel 2 und 3 (Papiere 3 und 4 in Tabelle 3) deutliche verbesserte Eigenschaften im Hinblick auf Festigkeiten (wie Scott - Bond, Weiterreißarbeit und Falzbruchwiderstand), Oberflächeneigenschaften (wie Taber) und optische Eigenschaften (wie Opazität) bei deutlich verbesserten Laufeigenschaften des gemäß Vergleichsbeispiel hergestellten Papiers.

Die Polymer-Pigment-Hybride können in Form von wässrigen Pigment-Anschlämmungen bei guten Laufeigenschaften der Papiermaschine zu Papieren verarbeitet werden, bei denen die Festigkeitseigenschaften, optischen Eigenschaften und Oberflächeneigenschaften verglichen mit herkömmlichen Papieren verbessert sind. Außerdem stauben die nach dem erfindungsgemäßen Verfahren hergestellten Papiere im Kopierprozess nicht in dem Maße wie Papiere, die einen unbehandelten Füllstoff enthalten.

### Herstellung von füllstoffhaltigen Papieren 1

Ein typischer SC-Stoff (Zusammensetzung: 70 % Holzschliff, stippenfrei aufgeschlagen, 10% Ausschuss, stippenfrei aufgeschlagen und 20% Sulfatzellstoff, Mahlgrad 35 ° SR) wurde mit Trinkwasser auf eine Feststoffkonzentration von 0,4% eingestellt.
Um das Verhalten von der beschriebenen Anschlämmung 1 im Vergleich zu Clay und GCC bei der Herstellung von füllstoffhaltigem Papier zu ermitteln, legte man jeweils 500 ml der Papierstoffsuspension vor und dosierte zu dieser Pulpe die genannten Füllstoffe, sowie eine Kombination aus kationischen Retentionsmitteln (Polymin® SK und Polymin® KE 2020). Die Menge an Retentionsmittel und an Pigmentslurry wurde mit mehreren Vorversuchen so eingestellt, dass der unten angegebene Füllstoffgehalt erreicht wurde.

Die Papierblätter wurden jeweils auf einem Rapid-Köthen-Blattbildner nach ISO 5269/2 mit einem Blattgewicht von 52 g/m2 gefertigt und anschließend bis zu einem Feuchtegehalt von 10% getrocknet und danach mit einem Liniendruck von 90daN/cm 3 mal bei 90°C kalandiert.

Nach einer Lagerzeit im Klimaraum bei konstant 23 °C und 50 % Luftfeuchtigkeit für 24 Stunden wurden folgende Papierprüfungen durchgeführt:
Tensile: DIN 54540
Rauigkeit: ISO 8791/2-90
Luftdurchlässigkeit: DIN 53120 TOI-98, ISO 5636/3-92
Lichtstreuung: DIN 54500 96
Lichtadsorption: DIN 54500 96

Die Eigenschaften der kalandrierten Papiere sind in Tabelle 4 angegeben.

**Tabelle 4**

| | Vergleichs-bsp. 4 | Vergleichs-bsp. 5 | Beispiel 2 | Beispiel 3 |
|---|---|---|---|---|
| | Clay | GCC (gefälltes Ca-CO₃) | Anschlämmung 1 (Hybrid) | Anschlämmung 1 (Hybrid) |
| Füllstoffgehalt [%] | 35 | 35 | 35 | 50 |
| Tensile [N] | 16 | 14 | 18 | 13 |
| Rauhigkeit (PPS) | 1,1 | 1,2 | 1,2 | 1,2 |
| Luftdurchlässigkeit ml/min (Bendtsen) | 45 | 120 | 55 | 80 |
| Lichtstreuung m²/kg | 54 | 76 | 57 | 56 |
| Lichtabsorption m²/kg | 2,6 | 1,7 | 1,6 | 1,3 |

Wie aus Tabelle 4 hervorgeht, zeigt ein Papier, das 50 % Polymer-Hybrid-Pigment enthält (Beispiel 3) im Vergleich mit einem Clay enthaltendem Papier gemäß Vergleichsbeispiel 4 trotzdem noch Papiereigenschaften wie der Standard.

### Herstellung von füllstoffhaltigen Papieren 2

Ein weiterer SC-Stoff (Zusammensetzung: 17 % Zellstoff, 46 % Holzschliff, stippenfrei aufgeschlagen) wurde mit Wasser auf eine Feststoffkonzentration von 0,4% eingestellt.

Dieser Papierstoff wurde dann jeweils in einer Papiermaschine unter Verwendung der in Tabelle 5 aufgeführten Einsatzstoffe zu einem Papier mit einem Flächengewicht von 54 g/m² bei einer Geschwindigkeit von ca. 950 m/min verarbeitet. Nach dieser Vorschrift wurden 3 Papiere hergestellt, die sich in der Art und Menge des jeweils eingesetzten Füllstoffs unterscheiden. Als Retentionsmittel wurde ein kationisches Retentionsmittel (Polymin® 8209) verwendet. Als Fixiermittel wurde noch ein kationisches Polymer (Catiofast® GM) eingesetzt.
- Papier 5:: Als Füllstoff wurde ein handelsübliches Calciumcarbonat 21 % in wässriger Anschlämmung eingesetzt (Vergleichsbeispiel 6) und ein handelsübliches Kaolin mit 14 %.
- Papier 6:: Gemäß obigem Beispiel wurde das Polymer-Pigment-Hybrid gemäß Anschlämmung 1 (21 % Polymer-Pigment-Hybrid) und 14 % Kaolin eingesetzt.
- Papier 7:: Als Füllstoff wurde das Polymer-Pigment-Hybrids gemäß Anschlämmung 1 (31 % Polymer-Pigment-Hybrid) und 14 % Kaolin eingesetzt.

Tabelle 5 gibt einen Überblick über die Herstellung der Papiere 5 bis 7.

**Tabelle 5**

| | Vergleichs-Bsp. 6 | Beispiel 4 | Beispiel 5 |
|---|---|---|---|
| Zellstoff | 17 | 17 | 18 |
| Holzschliff | 46 | 46 | 37 |
| Calciumcarbonat [% im Papier] | 21 | 0 | 0 |
| Polymer-Pigment-Hybrid aus Anschlämmung 1 [% im Papier] | 0 | 21 | 31 |
| Clay (Kaolin) | 14 | 14 | 14 |
| Polymin® 8209 | 0,3 | 0,3 | 0,44 |
| Catiofast® GM | 0,03 | 0,03 | 0, 05 |
| Papier Nr. | 5 | 6 | 7 |

Während der Herstellung der Papiere wurden keine Ablagerungen in der Nass- und Trockenpartie der Papiermaschine beobachtet. Zudem verhielt sich auch die Schaumneigung in dem Siebwasserbehälter und die Abrisshäufigkeit während der Versuche normal

Nach einer Lagerzeit im Klimaraum bei konstant 23 °C und 50 % Luftfeuchtigkeit für 24 Stunden wurden folgende Papierprüfungen durchgeführt:
Tensile: DIN 54540
Rauigkeit: ISO 8791/2-90
Porosität: ISO 3687
Weiße CIE: DIN 5 033

Die Eigenschaften der kalandrierten Papiere sind in Tabelle 6 angegeben.

**Tabelle 6**

| | | Papier 5 | Papier 6 | Papier 7 |
|---|---|---|---|---|
| Füllstoffgehalt [%] | | 35 | 35 | 45 |
| Tensile [N] | | 25,8 | 29,5 | 26,4 |
| Rauhigkeit (PPS) | | 1,36 | 1,17 | 1,12 |
| Porosität s (Gurley) | | 560 | 730 | 855 |
| Weiße CIE | | 76 | 76 | 75 |

Wie aus Tabelle 6 hervorgeht, zeigt das Papier 7 mit dem hohen Füllstoffgehalt von 45 % (31 % Polymer-Pigment-Hybrid und 14 % Clay (Kaolin)) im Vergleich mit Papier 4 (Vergleichsbeispiel 6) mit einem Gesamtfüllstoffgehalt von 35 % (31 % Calciumcarbonat und 14 % Clay (Kaolin)) noch vergleichbare Papiereigenschaften. Auch traten keine Probleme bei der Herstellung der Papiere auf.

## Patentansprüche

1. Verfahren zur Herstellung von füllstoffhaltigen Papieren und füllstoffhaltigen Papierprodukten durch Zusatz einer wässrigen Anschlämmung mindestens eines feinteiligen Füllstoffs, der mit mindestens einem Bindemittel behandelt ist, zu einem Papierstoff und Entwässerns des Papierstoffs unter Blattbildung, **dadurch gekennzeichnet, dass** man als Füllstoff ein Polymer-Pigment-Hybrid einsetzt, das erhältlich ist durch Vermahlen einer wässrigen Anschlämmung mindestens eines anorganischen Pigments in Gegenwart mindestens eines Bindemittels und gegebenenfalls durch Trocknen der so erhältlichen wässrigen Anschlämmung und Redispergieren des getrockneten Polymer-Pigment-Hybrids in Wasser.

2. Verfahren nach Anspruch 1, **dadurch gekennzeichnet, dass** man zur Herstellung des Polymer-Pigment-Hybrids eine 1 bis 80 gew.-%ige wässrige Anschlämmung mindestens eines anorganischen Pigments aus der Gruppe bestehend aus Titandioxid, Aluminiumoxid, Aluminiumhydroxid, Kaolin, Talk, Dolomit, Ton, Bentonit, Satinweiß, Calciumcarbonat, Calciumsulfat und/oder Bariumsulfat in Gegenwart eines natürlichen und/oder synthetischen Bindemittels vermahlt.

3. Verfahren nach Anspruch 1 oder 2, **dadurch gekennzeichnet, dass** man die wässrige Anschlämmung mindestens eines anorganischen Pigments in Gegenwart mindestens eines Bindemittels in einer Kugelmühle vermahlt.

4. Verfahren nach einem der Ansprüche 1 bis 3, **dadurch gekennzeichnet, dass** man zur Herstellung des Polymer-Pigment-Hybrids als anorganisches Pigment Calciumcarbonat in Form von Kalk, Kreide, Calcit, Marmor und/oder präzipitiertem Calciumcarbonat einsetzt.

5. Verfahren nach einem der Ansprüche 1 bis 4, **dadurch gekennzeichnet, dass** man zur Herstellung des Polymer-Pigment-Hybrids ein natürliches Bindemittel aus der Gruppe ausgewählt unter Stärke, Kasein, der Proteine, Carboxymethylcellulose und/oder Ethylhydroxyethylcellulose einsetzt.

6. Verfahren nach einem der Ansprüche 1 bis 4, **dadurch gekennzeichnet, dass** man zur Herstellung des Polymer-Pigment-Hybrids als Bindemittel ein synthetisches Polymer einsetzt, das zu mindestens 40 Gew.-% aus sogenannten Hauptmonomeren, ausgewählt aus C₁- bis C₂₀-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und ein oder zwei Doppelbindungen oder Mischungen dieser Monomeren aufgebaut ist.

7. Verfahren nach Anspruch 6, **dadurch gekennzeichnet, dass** man zur Herstellung des Polymer-Pigment-Hybrids als Bindemittel ein synthetisches Polymer einsetzt, das zu mindestens 60 Gew.-% aus Butadien oder Mischungen aus Butadien und Styrol aufgebaut ist.

8. Verfahren nach Anspruch 6, **dadurch gekennzeichnet, dass** man zur Herstellung des Polymer-Pigment-Hybrids als Bindemittel ein synthetisches Polymer einsetzt, das zu mindestens 60 Gew.-% aus C₁- bis C₂₀-Alkyl(meth)acrylaten oder Mischungen von C₁- bis C₂₀-Alkyl(meth)acrylaten mit Styrol aufgebaut ist.

9. Verfahren nach Anspruch 6, **dadurch gekennzeichnet, dass** das Bindemittel ein Polymer ist aufgebaut aus
10 bis 90 Gew.-% aliphatische Kohlenwasserstoff mit zwei Doppelbindungen
10 bis 90 Gew.-% vinylaromatische Verbindungen
0 bis 20 Gew.-% Säure-Monomer und
0 bis 20 Gew.-% weitere Monomere ist
oder ein Polymer aufgebaut aus
10 bis 95 Gew.-% C₁-C₁₀-Alkyl(meth)acrylate
0 bis 60 Gew.-% vinylaromatischen Verbindungen
0 bis 20 Gew.-% Säure-Monomer und
0 bis 10 Gew.-% weitere Monomere.

10. Verfahren nach einem der Ansprüche 6 bis 9, **dadurch gekennzeichnet, dass** es sich bei dem synthetischen Bindemittel um Emulsionspolymerisate handelt.

11. Verfahren nach einem der Ansprüche 1 bis 10, **dadurch gekennzeichnet, dass** man bei der Herstellung des Polymer-Pigment-Hybrids ein Gewichtsverhältnis von anorganischem Pigment zu Bindemittel zwischen 99 und 1, vorzugsweise zwischen 70 und 30 einstellt.

12. Verfahren nach einem der Ansprüche 1 bis 11, **dadurch gekennzeichnet, dass** die wässrige Suspension des Polymer-Pigment-Hybrids 5 bis 80 Gew.-% mindestens eines anorganischen Pigments, 1 bis 30 Gew.-% mindestens eines Bindemittels und 19 bis 94 Gew.-% Wasser enthält.

13. Verfahren nach einem der Ansprüche 1 bis 12, **dadurch gekennzeichnet, dass** das Vermahlen der anorganischen Pigmente in wässrigem Medium in Gegenwart mindestens eines Bindemittels zusätzlich in Gegenwart von Polyethylenwachsen und gegebenenfalls mindestens eines Dispergiermittels durchgeführt wird.

14. Verfahren nach einem der Ansprüche 1 bis 12, **dadurch gekennzeichnet, dass** die wässrige Suspension des Polymer-Pigment-Hybrids 0,01 bis 2 Gew.-% mindestens eines Dispergiermittels enthält.

15. Verfahren nach einem der Ansprüche 1 bis 12, **dadurch gekennzeichnet, dass** das Polymer-Pigment-Hybrid einen mittleren Teilchendurchmesser von 0,01 bis 50 µm hat.

16. Verfahren nach einem der Ansprüche 1 bis 15, **dadurch gekennzeichnet, dass** man eine wässrige Anschlämmung mindestens eines Polymer-Pigment-Hybrids in einer solchen Menge zum Papierstoff dosiert, dass man Papier oder Papierprodukte mit einem Füllstoffgehalt von 5 bis 70 Gew.-%, vorzugsweise 20 bis 50 Gew.-%, jeweils bezogen auf trockenen Papierstoff, erhält.

17. Verwendung von wässrigen Anschlämmungen von Polymer-Pigment-Hybriden, die erhältlich sind
(i) durch Vermahlen einer wässrigen Anschlämmung mindestens eines anorganischen Pigments in Gegenwart mindestens eines Bindemittels oder
(ii) durch Trocknen der gemäß (i) erhältlichen wässrigen Anschlämmung und Redispergieren des getrockneten Polymer-Pigment-Hybrids in Wasser,
als Zusatz zum Papierstoff zur Herstellung von füllstoffhaltigem Papier, füllstoffhaltigem Karton oder füllstoffhaltiger Pappe durch Entwässern des Papierstoffs unter Blattbildung.

## Claims

1. Method for producing filler-containing papers and filler-containing paper products by adding an aqueous suspension of at least one finely particulate filler, which is treated with at least one binder, to a papermaking stock and dewatering the papermaking stock while forming sheets, **characterized in that** a polymer-pigment hybrid is used as the filler, obtained by grinding an aqueous suspension of at least one inorganic pigment in the presence of at least one binder and optionally by drying the aqueous suspension thus obtained and redispersing the dried polymer-pigment hybrid in water.

2. Method according to claim 1, **characterized in that** in order to produce the polymer pigment hybrid, 1 to 80 wt.% aqueous suspension of at least one inorganic pigment from the group consisting of titanium dioxide, aluminium oxide, aluminium hydroxide, kaolin, talc, dolomite, clay, bentonite, satin white, calcium carbonate, calcium sulfate and/or barium sulfate are ground in the presence of a natural and/or synthetic binder.

3. Method according to claim 1 or 2, **characterized in that** the aqueous suspension of at least one inorganic pigment is ground in a ball mill in the presence of at least one binder.

4. Method according to one of claims 1 to 3, **characterized in that** in order to produce the polymer pigment hybrid, calcium carbonate in the form of limestone, chalk, calcite, marble and/or precipitated calcium carbonate is used as the inorganic pigment.

5. Method according to one of claims 1 to 4, **characterized in that** in order to produce the polymer pigment hybrid, a natural binder is used selected from the group consisting of starch, casein, proteins, carboxymethyl cellulose and/or ethylhydroxyethyl cellulose.

6. Method according to one of claims 1 to 4, **characterized in that** in order to produce the polymer pigment hybrid, a synthetic polymer is used as the binder, composed of at least 40 wt.% of so-called main monomers, selected from C₁ to C₂₀ alkyl (meth)acrylates, vinyl esters of carboxylic acids containing up to 20 carbon atoms, vinyl aromatics having up to 20 carbon atoms, ethylenically unsaturated nitriles, vinyl halides, vinyl ethers of alcohols containing 1 to 10 carbon atoms, aliphatic hydrocarbons having 2 to 8 carbon atoms and one or two double bonds, or mixtures of said monomers.

7. Method according to claim 6, **characterized in that** in order to produce the polymer pigment hybrid, a synthetic polymer is used as binder, which is composed of at least 60 wt.% butadiene or mixtures of butadiene and styrene.

8. Method according to claim 6, **characterized in that** in order to produce the polymer pigment hybrid, a synthetic polymer is used as binder, which is composed of at least 60 wt.% C₁ to C₂₀ alkyl (meth)acrylates or mixtures of C₁ to C₂₀ alkyl (meth)acrylates with styrene.

9. Method according to claim 6, **characterized in that** the binder is a polymer composed of
10 to 90 wt.% aliphatic hydrocarbon with two double bonds
10 to 90 wt.% vinyl aromatic compounds
0 to 20 wt.% acid monomers and
0 to 20 wt.% other monomers,
or a polymer composed of
10 to 95 wt.% C₁ - C₁₀ alkyl (meth)acrylate
0 to 60 wt.% vinyl aromatic compounds
0 to 20 wt.% acid monomers and
0 to 10 wt.% other monomers.

10. Method according to one of claims 6 to 9, **characterized in that** the synthetic binder is an emulsion polymerizate.

11. Method according to one of claims 1 to 10, **characterized in that** in the production of the polymer pigment hybrid, a weight ratio of inorganic pigment to binder of between 99 and 1 is used, preferably between 70 and 30.

12. Method according to one of claims 1 to 11, **characterized in that** the aqueous suspension of the polymer pigment hybrid contains 5 to 80 wt.% of at least one inorganic pigment, 1 to 30 wt.% of at least one binder and 19 to 94 wt.% water.

13. Method according to one of claims 1 to 12, **characterized in that** the grinding of the inorganic pigments is carried out in an aqueous medium in the presence of at least one binder and in the presence of polyethylene waxes and, if necessary, at least one dispersant.

14. Method according to one of claims 1 to 12, **characterized in that** the aqueous suspension of the polymer pigment hybrid contains 0.01 to 2 wt.% of at least one dispersant.

15. Method according to one of claims 1 to 12, **characterized in that** the polymer pigment hybrid has a mean particle diameter of 0.01 to 50 µm.

16. Method according to one of claims 1 to 15, **characterized in that** an aqueous suspension of at least one polymer pigment hybrid is dosed into the papermaking stock in an amount such that paper or paper products are obtained having a filler content of 5 to 70 wt.%, preferably 20 to 50 wt.%, in each case with respect to the dry papermaking stock.

17. Use of aqueous suspensions of polymer pigment hybrids, which can be obtained
(i) through grinding of an aqueous suspension of at least one inorganic pigment in the presence of at least one binder or
(ii) through drying of the aqueous suspension obtainable through (i) and redispersing the dried polymer pigment hybrid in water,
as an additive for papermaking stock for producing filler-containing paper, filler-containing cardboard or filler-containing paperboard, through dewatering of papermaking stock while forming sheets.

## Revendications

1. Procédé de fabrication de papiers contenant une substance de charge et de produits en papier contenant une substance de charge par addition à une pâte aqueuse d'au moins une substance de charge à particules fines qui est traitée avec au moins un liant, à une pâte à papier et déshydratation de la pâte à papier par formation de feuilles, **caractérisé en ce qu'**est utilisé comme substance de charge, un hybride polymère/pigment qui peut être obtenu par broyage d'une pâte aqueuse d'au moins un pigment inorganique en présence d'au moins un liant et éventuellement par séchage de la pâte aqueuse ainsi obtenue et redispersion de l'hybride polymère-pigment séché dans l'eau.

2. Procédé selon la revendication 1, **caractérisé en ce que** pour la fabrication de l'hybride polymère/pigment, est broyée 1 à 80 % en poids de pâte aqueuse d'au moins un pigment inorganique du groupe consistant en dioxyde de titane, oxyde d'aluminium, hydroxyde d'aluminium, kaolin, talc, dolomite, argile, bentonite, blanc de satin, carbonate de calcium, sulfate de calcium et/ou sulfate de baryum en présence d'un liant naturel et/ou synthétique.

3. Procédé selon la revendication 1 ou 2, **caractérisé en ce que** la pâte aqueuse d'au moins un pigment inorganique est broyée en présence d'au moins un liant dans un broyeur à bille.

4. Procédé selon l'une des revendications 1 à 3, **caractérisé en ce que**, pour la fabrication de l'hybride polymère/pigment, est utilisé comme pigment inorganique du carbonate de calcium sous la forme de chaux, de craie, de calcite, de marbre et/ou de carbonate de calcium précipité.

5. Procédé selon l'une des revendications 1 à 4, **caractérisé en ce que**, pour la fabrication de l'hybride polymère/pigment, un liant naturel du groupe choisi parmi l'amidon, la caséine, des protéines, de la carboxyméthylcellulose et/ou de l'éthylhydroxyéthylcellulose est utilisé.

6. Procédé selon l'une des revendications 1 à 4, **caractérisé en ce que** pour la fabrication de l'hybride polymère/pigment, est utilisé comme liant un polymère synthétique qui est constitué d'au moins 40 % en poids de dénommés monomères principaux, choisis parmi des alkyl(méth)acrylates en C₁ à C₂₀, des esters vinyliques d'acides carboxyliques avec jusqu'à 20 atomes de carbone, des composés aromatiques vinyliques comportant jusqu'à 20 atomes de carbone, des nitriles éthyléniquement insaturés, des halogénures de vinyle, des éthers de vinyle d'alcools contenant de 1 à 10 atomes de carbone, des hydrocarbures aliphatiques avec 2 à 8 atomes de carbone et une ou deux doubles liaisons ou des mélanges de ces monomères.

7. Procédé selon la revendication 6, **caractérisé en ce que** pour la fabrication de l'hybride polymère/pigment, est utilisé comme liant un polymère synthétique qui est constitué d'au moins 60 % en poids de butadiène ou de mélanges de butadiène et de styrène.

8. Procédé selon la revendication 6, **caractérisé en ce que** pour la fabrication de l'hybride polymère/pigment, est utilisé comme liant un polymère synthétique qui est constitué d'au moins 60 % en poids d'alkyl(méth)acrylates en C₁ à C₂₀ ou des mélanges d'alkyl(méth)acrylates en C₁ à C₂₀ avec du styrène.

9. Procédé selon la revendication 6, **caractérisé en ce que** le liant est un polymère constitué de
10 à 90 % en poids d'hydrocarbure aliphatique avec deux doubles liaisons
10 à 90 % en poids de composés vinylaromatique
0 à 20 % en poids de monomère d'acide et
0 à 20 % en poids d'autres monomères
ou un polymère constitué de
10 à 95 % en poids d'alkyl(méth)acrylate en C₁ à C₁₀
0 à 60 % en poids de composés vinylaromatiques
0 à 20 % en poids de monomère d'acide et
0 à 10 % en poids d'autres monomères.

10. Procédé selon l'une des revendications 6 à 9, **caractérisé en ce que** le liant synthétique est un polymère en émulsion.

11. Procédé selon l'une des revendications 1 à 10, **caractérisé en ce que** lors de la fabrication de l'hybride polymère/pigment, un rapport en poids de pigment inorganique au liant entre 99 et 1, de préférence entre 70 et 30 est ajusté.

12. Procédé selon l'une des revendications 1 à 11, **caractérisé en ce que** la suspension aqueuse de l'hybride polymère/pigment contient 5 à 80 % en poids d'au moins un pigment inorganique, 1 à 30 % en poids d'au moins un liant et 19 à 94 % en poids d'eau.

13. Procédé selon l'une des revendications 1 à 12, **caractérisé en ce que** le broyage des pigments inorganiques dans un milieu aqueux est réalisé en présence d'au moins un liant et en outre en présence de cires de polyéthylène et éventuellement d'au moins un agent dispersant.

14. Procédé selon l'une des revendications 1 à 12, **caractérisé en ce que** la suspension aqueuse de l'hybride polymère/pigment contient 0,01 à 2 % en poids d'au moins un dispersant.

15. Procédé selon l'une des revendications 1 à 12, **caractérisé en ce que** l'hybride polymère/pigment a un diamètre moyen de particule de 0,01 à 50 µm.

16. Procédé selon l'une des revendications 1 à 15, **caractérisé en ce qu'**à la pâte à papier est ajoutée une pâte aqueuse d'au moins un hybride polymère/pigment en une quantité telle que sont obtenus du papier ou des produits en papier avec une teneur en substance de charge de 5 à 70 % en poids, de préférence 20 à 50 % en poids respectivement par rapport à la pâte à papier sèche.

17. Utilisation de pâtes aqueuses d'hybrides polymère/pigment qui peuvent être obtenues
(i) par broyage d'une pâte aqueuse d'au moins un pigment inorganique en présence d'au moins un liant ou
(ii) par séchage de la pâte aqueuse pouvant être obtenue selon (i) et redispersion de l'hybride polymère/pigment dans de l'eau,
comme additif à la pâte à papier pour la fabrication de papier contenant une substance de charge, de carton contenant une substance de charge ou de carton ondulé contenant une substance de charge par déshydratation de la pâte à papier par formation de feuilles.
